(19) **Europäisches Patentamt / European Patent Office / Office européen des brevets**

(11) **EP 1 654 596 B1**

(12) **EUROPEAN PATENT SPECIFICATION**

(45) Date of publication and mention of the grant of the patent:
**28.03.2012 Bulletin 2012/13**

(21) Application number: **04745205.7**

(22) Date of filing: **09.07.2004**

(51) Int Cl.:
*G03H 1/08* (2006.01)

(86) International application number:
**PCT/IT2004/000380**

(87) International publication number:
**WO 2005/017630 (24.02.2005 Gazette 2005/08)**

(54) **METHOD FOR MODIFYING SPATIAL RESOLUTION IN THE RECONSTRUCTION OF IMAGES IN DIGITAL HOLOGRAPHY**

VERFAHREN ZUM MODIFIZIEREN DER RÄUMLICHEN AUFLÖSUNG BEI DER REKONSTRUKTION VON BILDERN IN DER DIGITALEN HOLOGRAPHIE

PROCEDE DE MODIFICATION DE RESOLUTION SPATIALE DANS LA RECONSTRUCTION D'IMAGES EN HOLOGRAPHIE NUMERIQUE

(84) Designated Contracting States:
**AT BE BG CH CY CZ DE DK EE ES FI FR GB GR HU IE IT LI LU MC NL PL PT RO SE SI SK TR**

(30) Priority: **13.08.2003 IT RM20030398**

(43) Date of publication of application:
**10.05.2006 Bulletin 2006/19**

(73) Proprietor: **CONSIGLIO NAZIONALE DELLE RICERCHE**
**00185 Roma (IT)**

(72) Inventors:
• **COPPOLA, Giuseppe**
  **Piazzale Aldo Moro 7,**
  **I-00185 Roma (IT)**
• **DE NICOLA, Sergio**
  **Piazzale Aldo Moro 7,**
  **I-00185 Roma (IT)**
• **FERRARO, Pietro**
  **Piazzale Aldo Moro 7,**
  **I-00185 Roma (IT)**
• **FINIZIO, Andrea**
  **Piazzale Aldo Moro 7,**
  **I-00185 Roma (IT)**
• **PIERATTINI, Giovanni**
  **Piazzale Aldo Moro 7,**
  **I-00185 Roma (IT)**

(74) Representative: **Perronace, Andrea et al**
**BARZANÒ & ZANARDO**
**26, Via Piemonte**
**00187 Roma (IT)**

(56) References cited:
**US-B1- 6 411 406**

• **KREIS T M ET AL: "METHODS OF DIGITAL HOLOGRAPHY: A COMPARISON" PROCEEDINGS OF THE SPIE, SPIE, BELLINGHAM, VA, US, vol. 3098, 1997, pages 224-233, XP000964987 ISSN: 0277-786X**
• **BERNHARDT M ET AL: "CODING AND BINARIZATION IN DIGITAL FRESNEL HOLOGRAPHY" OPTICS COMMUNICATIONS, NORTH-HOLLAND PUBLISHING CO. AMSTERDAM, NL, vol. 77, no. 1, 1 June 1990 (1990-06-01), pages 4-8, XP000127687 ISSN: 0030-4018**
• **SCHNARS U ET AL: "DIGITAL RECORDING AND NUMERICAL RECONSTRUCTION OF HOLOGRAMS" MEASUREMENT SCIENCE AND TECHNOLOGY, IOP PUBLISHING, BRISTOL, GB, vol. 13, no. 9, September 2002 (2002-09), pages R85-R101, XP001170845 ISSN: 0957-0233**
• **YAMAGUCHI I ET AL: "Phase-shifting color digital holography" OPTICS LETTERS OPT. SOC. AMERICA USA, vol. 27, no. 13, 1 July 2002 (2002-07-01), pages 1108-1110, XP002308739 ISSN: 0146-9592 cited in the application**

**Description**

The present invention refers to a method for modifying spatial resolution in the reconstruction of images in digital holography.

More particularly, the method according to the present invention allows the process of reconstruction of images employed in the interferometric technique of digital holography to be improved, thanks to the improvement of the spatial resolution of the reconstructed complex field, which allows upgrading applications of Digital Holography technique.

The interferometric technique, allowing recording and reconstructing the complex (amplitude and phase) field reflected, transmitted and/or scattered by an object, is commonly called in scientific literature as Digital Holography, which will be hereinafter abbreviated with the acronym DH (e.g. see: US Patent No. 6,262,818, to Cuche et al., entitled "Method for simultaneous amplitude and quantitative phase contrast imaging by numerical reconstruction of digital holograms", and US Patent No. 6,246,495, to Yamaguchi, entitled "Phase-shift digital holographic apparatus").

It is called digital hologram an interference pattern recorded by means of an integrated array of radiation detectors.

Several methods exist allowing the numerical reconstruction of the complex field starting from the hologram, and in particular there are the "convolution" method and the one called the "Fresnel" method.

In particular, in Fresnel method, as it is known, the spatial resolution of the complex field (or also amplitude and phase) is determined by some parameters. Some of these parameters are determined by the characteristics of the integrated array of radiation detectors and, in particular, by the number of elements of which the array is composed and by the size of the single element. Besides, other parameters are the reconstruction distance, determined by distance d at which the object (or points of its surface and its volume), and the wavelength $\lambda$ of the light source, used for creating the hologram, which are employed in the numerical process of reconstruction.

Commonly, in literature, the spatial resolution is quantified by means of the "reconstruction pixel", which is expressed as a length, and which will be hereinafter indicated with the acronym PR. The dimensions of the bidimensional PR, $\Delta\xi$ along the x-axis and $\Delta\eta$ along the y-axis, depend on the aforementioned parameters through the following mathematic formulas:

$$\Delta\xi = \frac{\lambda\, d}{N\,\Delta x} \qquad \Delta\eta = \frac{\lambda\, d}{M\,\Delta y} \qquad\qquad (1)$$

where $N$ is the number of acquired pixels (acquired by an image acquisition device) along the x-axis, $M$ is the number of pixels along the y-axis, $\Delta x$ and $\Delta y$ are the pixel size along the two directions of x- and y-axis.

From this formula, it is clear that the complex field will have a PR of different value at different distances, keeping constant the other parameters, and in particular the size of PR increases under the increase of the reconstruction distance. In such case, the spatial resolution with which the complex field is reconstructed will have an inferior spatial resolution. On the contrary, the spatial resolution will be superior at lower reconstruction distance since in this case the PR size decreases.

In other applications, as for example spectroscopic or scattering enquiries, it is required the recording of several holograms of the same object under the same conditions, but obtained with different source wavelengths (or with different sources at different wavelengths) (e.g. see the paper by M.K. Kim, "Wavelenght-scanning digital interference holography for optical section imaging", Optics Letters, Vol. 24, Issue 23, 1999, page 1693). In such case, by applying the reconstruction process to the several holograms related to each wavelength, holograms will be obtained which are reconstructed with different spatial resolutions, since, as it appears clear from equation (1), the PR for each wavelength is different. In particular, the reconstruction resolution will be higher for lower wavelengths which give lower PR values and vice versa.

In the state of the art prior to the present invention, there exist some problems connected to the fact that the reconstruction resolution is rigidly determined by some parameters such as distance and wavelength. By way of example, some particularly problematic cases will be mentioned in the following.

In some applications, digital holography is used for analysing variations to which the object under observation is subject because of an external action (e.g. force, pressure, temperature change). The variations are measured in a quantitative way by subtracting the phase maps of two holograms recorded with the object in two different states (for example before and after the external disturbance action). This technique is called Digital Holographic Interferometry.

In these dynamic type observations, the distance between the object under observation and the detection device (e.g. a camera), at which the hologram is recorded, could unintentionally change, obtaining different holograms recorded with the object placed at different distances from the detection device. Hence, in order to observe the object always in focus, it is necessary to change the value of distance to be employed in the reconstruction process (see the paper by Ferraro et al. in Optics Letters, 28(14), (2003), 1257-1259) for each recorded hologram.

From equations (1), it results that the PR value is different for holograms reconstructed at different distances, and the spatial resolution, with which the object (in the complex field: amplitude and phase) is reconstructed in the various holograms, is consequently different. This avoids carrying out in a direct way a difference of phase obtained, for instance, with two holograms separately reconstructed at two different distances, by actually preventing digital holographic interferometry technique from being applied. In fact, since reconstruction resolution is different in the two holograms, it is then not possible to carry out a direct subtraction of the phase maps (a one-to-one correspondence among the points of the two maps does not exist).

In general, the change of either the wavelength or the distance between object and camera, may make the resolution with which it is possible to observe the object worst.

This generally prevents any direct subtraction of phase between the two reconstructed images for detecting and quantifying small physical-mechanical variations of the object. Such subtraction procedure is typically employed in the "holographic interferometry" technique allowing different states of the same object to be compared.

Similarly, in case of applications of colour DH with use of different wavelengths, images reconstructed with different wavelengths do not overlap since the PR of each reconstruction is different (e.g. see the paper by I.Yamaguchi, "Phaseshifting color digital holography", Optics Letters, Vol. 27, Issue 13, July 2002, page 1108, and the paper by J.Kato et al., "Multicolor digital holography with an achromatic phase shifter", Optics Letters, Vol. 27, Issue 16, 2002, page 1403.

M. Bernhardt et al. in the article "Coding and binarisation in digital Fresnel holography", Optics Communications, North-Holland Publishing Co. Amsterdam, vol. 77 no. 1, 1 June 1990, p.4-8, deals with the use of Fresnel Transform in the reconstruction of images in DH (improving diffraction efficiency).

T. M. Kreis et al. in the article "Methods of Digital Holography: a comparison", Proceedings of the SPIE, SPIE, Bellingham, VA, US, vol.3098, 1997, pages 224-233, ISSN: 0277-786X, teaches to embed a digitised hologram into an array having a larger number of pixels in the specific context of the convolution approach, in order to vary the size of the reconstructed images.

In the latter article, moreover, it is concluded that the Fresnel approach cannot be applied if reconstruction in different depths are to be compared, and inversely, the convolution approach is not much suited if the whole possible field of view for opaque or transparent objects has to be reconstructed.

A general method of varying the resolution of the reconstructed image is not provided in the prior art.

The Applicant does not know effective solutions to the above problems.

In fact, as it results from literature, the methods presently employed for obtaining a better resolution in observation of objects make use of complex experimental apparatuses requiring particularly delicate calibration procedures (e.g. see: Indebetouw et al., Appl. Phys. Lett. 75, (1999) 2017-2019).

It is an object of the present invention to provide a method of reconstruction of the holographic image starting from a digitized hologram solving the above drawbacks and enabling further uses.

It is also an object of the present invention to provide apparatuses and tools necessary for the execution of the method that is object of the invention.

It is further object of the present invention an apparatus for acquiring and reconstructing holographic images making use of the method that is object of the invention.

It is specific subject matter of this invention a method for the reconstruction of holographic images as defined in appended claim 1. Optional additional features are included in dependent claims 2-7.

It is further specific subject matter of the present invention a computer program characterised in that it comprises code means apt to execute, when running on a computer, the method subject of the invention.

It is still specific subject matter of the invention a memory medium, readable by a computer, storing a program, characterised in that the program is the computer program subject of the invention.

It is further specific subject matter of the invention an apparatus for acquiring and reconstructing holographic images, as defined in appended claim 10.

The invention will be now described, by way of illustration and not by way of limitation, by particularly referring to the drawings of the enclosed Figures, in which:

- figure 1 shows a block and flow hybrid diagram of the traditional holographic reconstruction method;
- figure 2 shows a block and flow hybrid diagram describing the holographic reconstruction method according to the invention;
- figure 3a shows the effect of the reconstruction in amplitude of a Talbot effect Ronchi grating made through the traditional method;
- figure 3b shows the effect of the reconstruction in amplitude of a Talbot effect Ronchi grating made through the method according to the invention;
- figure 4a shows a particular information related to the reconstruction of figure 3a, in relation to a certain reconstruction distance, as a function of the number of pixels;
- figure 4b shows a particular information related to the reconstruction of figure 3b, in relation to a certain reconstruction distance, as a function of the number of pixels; and
- figure 5 shows a preferred arrangement of the null pixels used in the method according to the invention.

As mentioned before, digital holography consists of recording a distribution of interference, which is created between an object beam (that has interacted with the object under observation) and a reference beam, through an ad hoc system for acquiring images.

Such interference distribution is processed through processing methods apt to reconstruct an image of the object under observation.

In particular, the recorded hologram is multiplied by a digital replica of the reference beam and the diffraction integral of this product is calculated. Such hologram allows a reconstruction of the object under observation to be obtained.

The reflection holographic recording apparatus may be for instance of the Mach-Zehnder type. Once analogue data are acquired, they are processed by a processing unit.

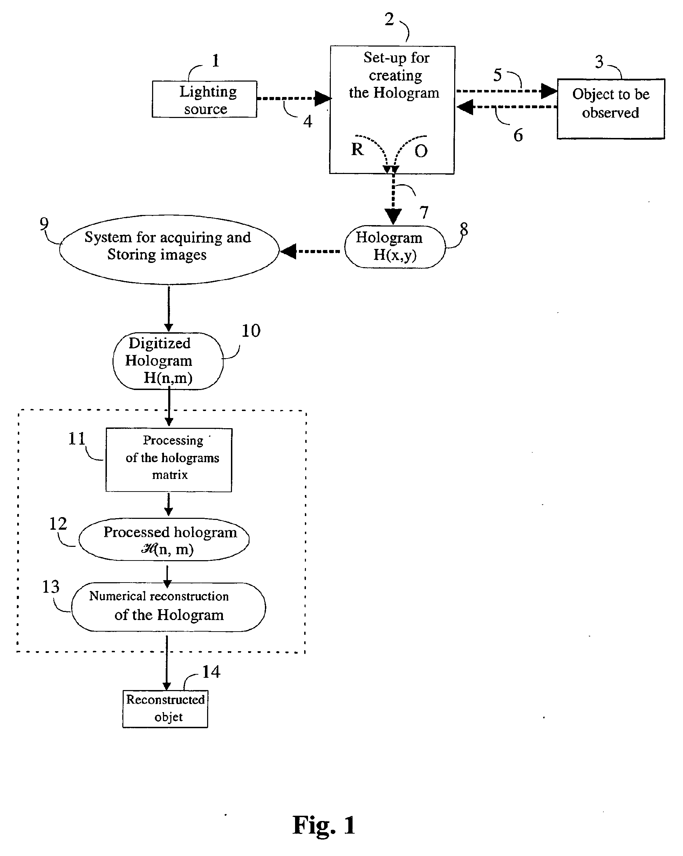

Making reference to figure 1, such processing unit processes data according the traditional method. The unit of preparation of hologram acquisition conditions or "set-up" 2 collects radiation 4 coming from source 1 and illuminate with radiation 5 the object 3 under observation. Also, in such set-up 2 is present a device for creating, from the beam 6 that is reflected, transmitted or scattered by the object 3, an object beam *O*, and a device for creating a reference beam *R*. The object beam *O* and the reference beam *R* are combined in the set-up 2 so as to create an interference distribution 7 in a plane. Such interference creates the hologram 8 of the object 3 under observation, and it may be described in terms of bidimensional distribution of intensity:

$$H(x, y) = |R|^2 + |O|^2 + R^*O + RO^*$$

where $R^*$ and $O^*$ represent the conjugate complex of the reference beam and of the object beam, respectively.

It is now necessary to specify that, as it will be shown later, the method according to the present invention is not restricted to the optical field and it may be applied for the numerical reconstruction of holograms recorded with any type of electromagnetic (for instance X rays) and non-electromagnetic radiation (for instance electron beams and/or acoustic waves). In particular, source 1 could be also made of a combination of two or more wavelengths. For this reason, type, wavelength and coherence of source 1 could be any.

The hologram 8 is acquired, digitized and stored through an acquisition system 9. To this end, any type of image acquisition system may be used.

The acquisition system 9 internally has a device for digitizing and computer storing the acquired image 8. The digitized image is called "digital hologram" 10 and it is described by an array $H(n \cdot \Delta x, m \cdot \Delta y)$ of $N \cdot M$ numbers, obtained by the bidimensional spatial sampling of the hologram $H(x,y)$ 8.

Such bidimensional spatial sampling may be described by the following formula:

$$H(n\Delta x, m\Delta y) = H(x, y)rect(\tfrac{x}{N\Delta x}, \tfrac{y}{M\Delta y})\sum_{n\approx 1}^{N}\sum_{m=1}^{M}\delta(x - n\Delta x, y - m\Delta y)$$

where $\delta(x,y)$ is a bidimensional Dirac delta function, n and *m* are integer, $\Delta x$ and $\Delta y$ are the sampling spacings along the *x*-axis and the *y*-axis respectively, $(N \cdot \Delta x) \times (M \cdot \Delta y)$ is the area of the image of the acquired hologram, *rect(x,y)* is a function the value of which is 1, if the point of coordinates $(x,y)$ is within the part of the acquired hologram, and 0 otherwise.

For a perfect reconstruction of the object image, it is necessary that the digitization process satisfies the sampling theorem. In particular, it has to be satisfied the condition that the spacing between the fringes present in the interference distribution 7 is larger than at least two pixels of the acquisition system 9. Hence, the sampling theorem establishes the minimum resolution that is obtainable with a certain experimental set-up 2.

One of the great advantages offered by the digital holography is the fact that it is possible to directly act on the digitized hologram 10 of the object 3 for carrying out operations on the acquired information.

This means that different processings of the images 11 may be made on the digitized hologram 10. Through such processings, it is for example possible to eliminate zero order diffraction present in hologram reconstruction, or to eliminate any "phase aberration" introduced by the used optical system.

The term "phase aberration" means a deformation of the wave front travelling through the hologram creation and recording system. The phase aberration correction compensates such deformations and allows obtaining a correct reconstruction of the observed object.

The process of numerical reconstruction 13 of the object under observation is based on two steps. In the first one, the "processed" digitized hologram $H(n,m)$ 12 has to be multiplied by a digitized replica of the reference beam R, obtaining the following formula:

$$F(n\Delta x, m\Delta y) = H(n\Delta x, m\Delta y) \cdot R(n\Delta x, m\Delta y) =$$
$$= R|R|^2 + R|O|^2 + RR^{\bullet}O + RRO^{\bullet}$$

where the first two terms correspond to the zero order diffraction, and from the third and/or fourth term it is possible to obtain the image of the observed object.

The second step of the propagation process consists of the propagation of the field distribution $F(n,m)$ from the plane wherein the camera is placed to the observation plane. This process leads to the reconstructed image 14.

It is then possible to numerically act on the recorded and stored digitized hologram through an electronic device for image acquisition (hereinafter generically called as camera) made of a discrete set of sensitive elements arranged in the shape of array of $N$ rows and $M$ columns, in order to obtain a higher spatial resolution with respect to the techniques presently in use.

In order to overcome the aforementioned drawbacks of the traditional method, the method according to the present invention is based on the extension of the array of the object hologram by introducing a number of additional fictitious points, the intensity of which is set to zero.

The object is then reconstructed with the technique of the hologram numerical propagation from the camera plane along the distance separating the object from the same plane of the camera.

The hologram propagation occurs by using the bidimensional Fresnel transform. The advantage of such integral is that its computation is simple and may be very fast performed by using a discrete formulation expressed in terms of Fourier transform. In fact, it is well known (see Goodman, "Introduction to Fourier Optics", MacGraw-Hill Companies Inc., 2nd ed., 1996) that the phenomenon of light propagation from a starting plane to a parallel plane placed at a distance d may be interpreted as a space-invariant linear system characterised by a transfer function having a finite band amplitude. Such transfer function has unitary module and phase depending on the spatial frequencies corresponding to the two orthogonal directions within the plane placed at a distance z from the starting plane.

In case of propagation of an optic field through the Fresnel numerical integral, the transfer function phase quadratically depends on the spatial frequencies. Consequently, dispersive effects are introduced in the hologram numerical reconstruction process which increase with the increase of the reconstruction distance and which generally contribute to make the reconstructed hologram spatial resolution worst.

As it will be clarified in the following, the extension of the dimension of the hologram array, by adding null elements, allows acting on the size of the minimum element composing the object reconstructed image (the "reconstruction pixel"), rather improving its resolution.

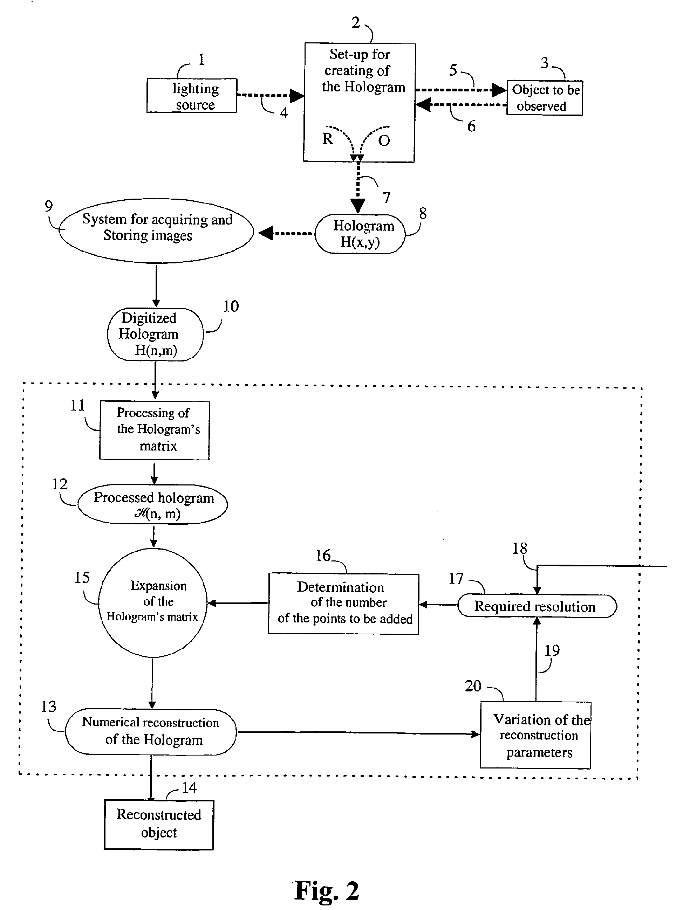

Making reference to figure 2, as in the traditional case, for carrying out the method according to the invention it is first of all necessary to have a holographic system for creating a hologram of the object under observation.

Such hologram is digitized and computer stored through a camera. The digitized hologram is a rectangular array obtained by sampling the hologram by means of the camera with a step $\Delta x$ along the x-axis and a step $\Delta y$ along the y-axis ($\Delta x$ and $\Delta y$ coincide with the camera pixel size) for a number of points equal to $N \cdot M$ ($N$ is the number of camera pixels along the x-axis and $M$ is the number of camera pixels along the y-axis).

The array size related to the digitized hologram is then enlarged by adding a suitable number of points so as to obtain the desired resolution in the hologram reconstruction process.

By using such extended array, it is then possible to exploit the technique of the bidimensional Fresnel transform for reconstructing the image of the object under observation, so gaining in definition.

In the configuration of the invention, set-up 2 is designed so as to produce a "Fresnel hologram", term indicating in the present context a hologram that is reconstructed through Fresnel scalar diffraction approximation.

The advantages of such approximation derives from the fact that its computation is very simple and may be performed in a very fast manner. In case of Fresnel approximation, numerical reconstruction of the hologram 12 will be carried out according to the invention through a discrete formulation of the Fresnel integral expressed in terms of discrete Fourier transform, that is:

$$\psi(k\Delta\xi,l\Delta\eta) = Ae^{\frac{i\pi}{\lambda d}(l^2\Delta\xi^2 + k^2\Delta\eta^2)} DFT\left[R(n\Delta x, m\Delta y)H(n\Delta x, m\Delta y)e^{\frac{i\pi}{\lambda d}(n^2\Delta x^2 + m^2\Delta y^2)}\right]_{l,k}$$

where $\lambda$ is the wavelength of source 1, $A$ is a complex constant, $n, m, l, k$ are integer ($-N/2 \le n, l \le N/2$ and $-M/2 \le m, k \le M/2$), $DFT$ is the discrete Fourier transform, which may be fast computed by making use of multiple FFT (Fast Fourier Transform) algorithms reported in literature, $\Delta x$ and $\Delta y$ are the sampling spacings of the hologram 12 (hence in the camera plane), d is the distance between the camera plane and the observation plane, and, finally, $\Delta\xi$ and $\Delta\eta$ represent the sampling spatial intervals in the observation plane which are defined by:

$$\Delta\xi = \frac{\lambda d}{N\Delta x} \qquad \Delta\eta = \frac{\lambda d}{M\Delta y} \qquad\qquad (1)$$

Hence, the reconstructed object will have size $(N\cdot\Delta\xi)\times(M\cdot\Delta\eta)$. The intervals described by equations (1) substantially define the resolution of the reconstructed object 14.

As it may be noted from the preceding formula, the resolution also depends on, besides the number of pixels and the resolution of the acquisition system 9, the wavelength $\lambda$ of the source 1 and the reconstruction distance $d$.

In the reconstruction processes, it is generally $\Delta\xi > \Delta x$ and $\Delta\eta > \Delta y$, i.e. the reconstructed object image is characterised by an inferior resolution with respect to the one with which the hologram 8 has been digitized and recorded.

As shown in the following, the method according to the invention allows solving the aforesaid problem and, keeping constant wavelength and reconstruction distance $d$, improving the resolution of the image of the reconstructed object 14.

Always making reference to figure 2, on the one hand, the proposed method allows the system of creation and recording of the hologram 8 not to be modified, and, on the other hand, it is compatible for applications wherein the hologram recording has to be carried out in real time and in a continuous way.

In the version presently preferred by the inventors, the method acts on the processed hologram 12, that is on the hologram which has been already subject to processing for a correct reconstruction of the object 3.

The size of the array describing the digitized hologram 12 is expanded during step 15 by adding a certain number of points as determined in step 16.

The number of points to be added 16 is determined by the resolution 17 that is desired to obtain in the reconstruction process 13.

The value of such resolution 17 may be given either by conditions established by requirements 18 external to the reconstruction process 13 (for instance for observing with higher accuracy the object image) or for compensating the loss of resolution 19 due to the reconstruction process in applications requiring, in particular, the variation 20 of $\lambda$ and/or $d$.

The number of points is not the only feature allowing a resolution improvement to be subsequently obtained.

In fact, it is needed to place the introduced fictitious points (i.e. the difference between the points computed as above and the acquired points) in a suitable way with respect to the detected points.

It is needed to be sure that the introduced zeros do not result in a transformed image (according to the function $\Psi(l\cdot\Delta x, k\cdot\Delta y)$ described above) presenting false frequencies.

For example, placing zeros among not null values of a sinusoidal plot would clearly introduce frequencies far apart from the one of the sine.

Although single particular arrangements could be suitably adopted in specific cases, the preferred arrangement according to the invention is the one having the fictitious points as contour of the detected image, that is without interspersing them among the effective points.

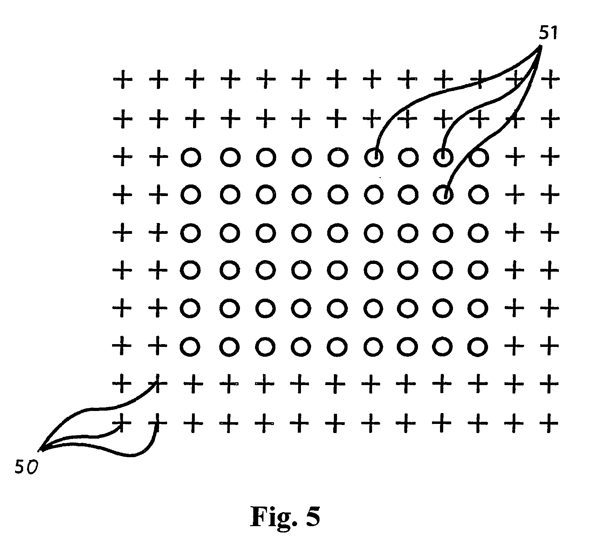

Making reference to the example of figure 5, the fictitious points 50 are arranged symmetrically with respect to the contour of pixels 51 of the detected image.

This contour arrangement is proper to images in any number of dimensions.

The classical reconstruction process 13 is then applied to the expanded array of the hologram.

The expansion 15 of the array size of the hologram 12 allows obtaining, thanks to the DFT properties, a reconstructed image with a lower spacing (that is with a better resolution) with respect to the reconstruction obtained without expanding the array.

In other words, the traditional reconstruction process based on the Fresnel transform implies a degradation of the resolution with which the object is reconstructed; instead, the addition according to the invention of new elements in the hologram array allows such resolution loss to be corrected at most obtaining a resolution equal to the physical one established by the sampling theorem.

In particular, if it is desired to obtain an image of the reconstructed object 14 with the same resolution of the digitized hologram 10, keeping constant wavelength $\lambda$ and reconstruction distance $d$, it is necessary to expand the array of the hologram 12 from size $N{\cdot}M$ to size $(d\lambda./\Delta x^2){\cdot}(d\lambda/\Delta y^2)$, as it is obtained by inverting formulas (1).

It would be theoretically possible to indefinitely improve the resolution of the holographic image by still adding new fictitious points. Actually, since the Fresnel transform re-distributes the intensity over all the points, beyond a certain number of fictitious points the intensity of many ones would be lowered below the background noise of the signal or the statistical noise of the same. However, it is matter of simple computation to determine the maximum number of fictitious points usable in any specific situation.

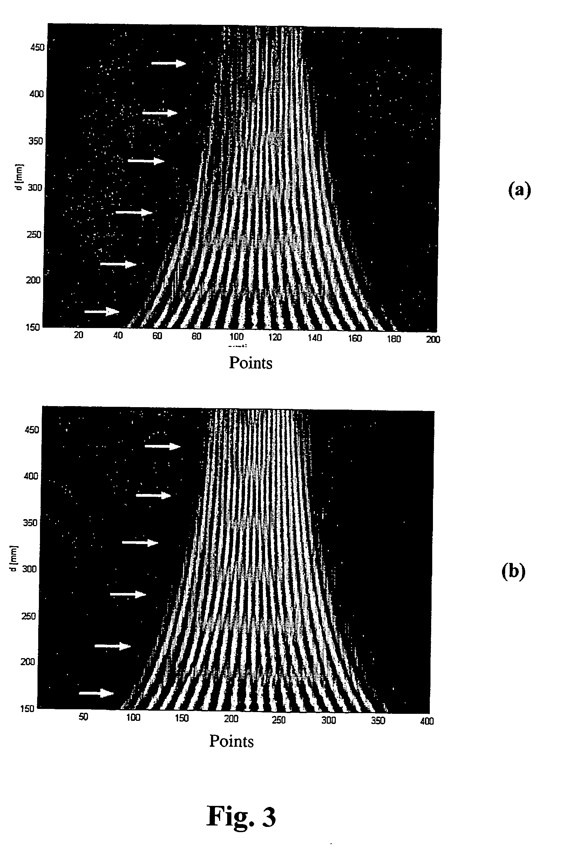

In figure 3 an example of application of the aforesaid method is reported. Such example is related to a coherent and monochromatic light source 1 with emission wavelength $\lambda$=532 nm, the observed object 3 is a Ronchi grating with step $\Lambda$=6.25 lines/mm, the acquisition and storing system is a CCD with $N$=512 and $M$=512 pixels and with square pixel size equal to $\Delta x$=A$y$=6.7$\mu$m. A Ronchi grating illuminated with monochromatic light generates the known Talbot effect, i.e. by observing the light scattered by the grating at increasingly long distances the grating rows appear increasingly defocused, save at particular distances (multiple of the so-called Talbot distance, i.e. $\Lambda^2/\lambda$) where the rows appear well defined and focused again. Hence, by using such effect, we are allowed not to handle focusing problems.

In particular, the holographic reconstruction of a single line of the aforesaid grating, the hologram of which has been recorded at an effective distance of 170mm, is reported in figure 3a for several values of the distance d between hologram plane and observation plane.

The marks placed on the figure show the distances at which, due to Talbot effect, it is necessary to observe the grating rows well defined and focused.

The typical "trumpet" shape of figure 3a, obtained by varying distance $d,$ is an indication of the reduction of the reconstruction pixel, according to equations (1).

The reduction of the reconstruction pixel, and hence of the reconstructed image resolution, under increasing distance $d,$ prevents the grating rows to be sharply observed; hence, there is an information loss with the increase of the reconstruction distance.

The method according to the invention allows such information to be recovered.

The holographic reconstruction of the expanded hologram of the Ronchi grating is reported in figure 3b for the same values of distance $d$ used in figure 3a.

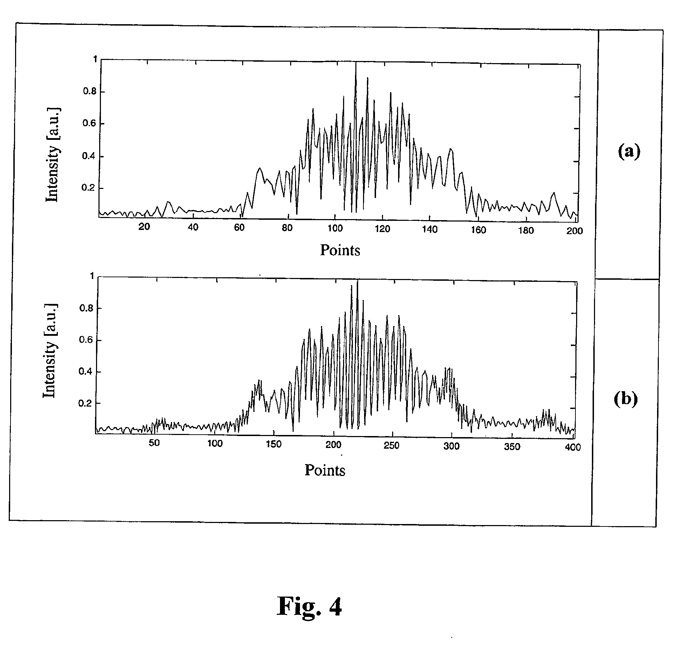

In particular, hologram size has been increased by 512 points along both $x$-axis and $y$-axis, hence obtaining a hologram of 1024·1024 pixels. Obviously, the obtained shape is still a "trumpet" one, but it is possible to observe that by increasing the reconstruction distance it is still possible to determine distances at which the grating rows well defined and focused again. For better pointing out the advantage given by the present reconstruction method, a line is reported in figure 4a and figure 4b at a certain reconstruction distance ($d$=434 mm), related to figure 3a and figure 3b, respectively. The difference between such distance and the recording distance (170 mm) is multiple of the Talbot distance, and the grating rows should then appear well defined.

But observing figure 4a, it is noted that the loss of resolution does not allow the grating rows to be sharply distinguished.

The application of the method subject of the present invention allows overcoming such degradation. In fact, observing figure 4b, wherein the reconstruction of the grating expanded hologram has been carried out, it is noted that the grating rows are well visible and sharp.

The reconstruction method according to the invention represents a significant improvement with respect to the other methods present in literature. In fact, the method according to the invention acts on the object digitized hologram, and it may adapt the resolution of the object reconstructed image to the various requirements of multiple applications.

The invention is particularly, but not exclusively, intended for reconstruction processes in digital holography where there is the need to improve the resolution with which the complex field (amplitude and phase), transmitted or reflected or scattered by the object, is reconstructed, or to keep constant such resolution when the variation of other parameters, of which the same reconstruction is function, would tend to make the resolving power of the holographic technique worst. In numerous, above all metrological, applications, there exists the need to improve the resolution with which an object is observed, modifying as less as possible the observation apparatus and preventing the acquisition times from increasing. This last requirement is particularly felt in all those applications where a real time observation of the object is required.

The preferred embodiments have been above described and some modifications of this invention have been suggested, but it should be understood that those skilled in the art can make variations and changes, without so departing from the related scope of protection, as defined by the following claims.

**Claims**

1. Method of reconstructing holographic images in digital holography, comprising a preliminary step wherein a holographic image is detected and transformed into a digitized hologram (10) by an image detection device (9) placed in a detection device plane and having sampling intervals $\Delta x$, $\Delta y$, the digitized hologram (10) being an array having a number $V_r$ of digital elementary pixels corresponding each to a signal intensity value (51) detected at elementary pixels of the image detection device, such that the spatial resolution associated with the digitized hologram is given by the sizes $\Delta x$, $\Delta y$ of the pixels corresponding to said sampling intervals of the image detection device, the method further comprising:

   - a first step (11,12) of processing the digitized hologram, and
   - a second step (13,15,16,17,18) wherein, starting from the digitized hologram processed in the first step, a reconstructed holographic image (14) is obtained by discrete Fresnel Transform applied on an array having $V_e$ values, wherein $V_e$ is larger than $V_r$ for reconstruction in an observation plane,

   **the method being characterised in that** said array that has a number of $V_e$ values (50, 51) includes said array of $V_r$ values and an integer number $p = V_e - V_r > 0$ of constant values (50), said number $V_e$ of values being:

   $$V_e = \frac{\lambda^2 d^2}{(\Delta x \Delta y)(\Delta \xi \Delta \eta)}$$

   i.e. inversely proportional to the product of the area of said elementary pixel and the desired area $\Delta \xi \Delta \eta$ in the observation plane corresponding to the product of spatial resolution intervals $\Delta \xi = (\lambda d / N_e \Delta x)$ and $\Delta \eta = (\lambda d / M_e \Delta y)$ associated with the reconstructed holographic image (14), $\lambda$, being the wavelength of the wave beam striking the object of which the hologram is recorded, and $d$ the distance between the detection device and the object of which the hologram is detected.

2. Method according to claim 1, **characterised in that** said $p$ constant values (50) are null values.

3. Method according to claim 1 or 2, **characterised in that** said $p$ values (50) are arranged externally to said array of $V_r$ values (51).

4. Method according to claim 3, **characterised in that** said $p$ values (50) are arranged in a symmetrical way.

5. Method according to claim 3, **characterised in that** said $p$ values (50) are arranged in a non-symmetrical way.

6. Method according to any one of the preceding claims, **characterised in that** the digitized hologram is a rectangular array of $V_r = N_r \cdot M_r$ values (51), each value corresponding to a pixel of dimensions $\Delta x$, $\Delta y$.

7. Method according to any claim 1 to 6, **characterised in that** $N_e = (\lambda d / \Delta x^2)$, $M_e = (\lambda d / \Delta y^2)$, $\Delta \xi = \Delta x$, $\Delta \eta = \Delta y$.

8. Computer program **characterised in that** it comprises code means apt to execute, when running on a computer the first and second method steps according to any one of claims 1 to 7.

9. Memory medium, readable by a computer, storing a program, **characterised in that** the program is the computer program according to claim 8.

10. Apparatus for acquiring and reconstructing holographic images, comprising an image detection device (9) arranged to acquire a digitized hologram, and a digitized hologram processing unit, **characterised in that** the processing unit processes said digitized hologram by using the method according to any one of claims 1 to 7.

**Patentansprüche**

1. Verfahren der Rekonstruktion holographischer Bilder in der digitalen Holographie, umfassend einen vorläufigen Schritt, in dem ein holographisches Bild erfasst und in ein digitalisiertes Hologramm (10) transformiert wird von einem Bilderfassungsgerät (9), das in einer Detektionsgeräteebene platziert ist und Abtastintervalle $\Delta x$, $\Delta y$ aufweist, wobei das digitalisierte Hologramm (10) ein Feld mit einer Anzahl $V_r$ von digitalen elementaren Pixeln ist, die jeweils einem Signalintensitätswert (51) entsprechen, der an elementaren Pixeln des Bilderfassungsgeräts erfasst werden, so dass die dem digitalisierten Hologramm zugeordnete räumliche Auflösung gegeben ist durch die Größen $\Delta x$, $\Delta y$ der Pixel entsprechend den Abtastintervallen des Bilderfassungsgeräts, wobei das Verfahren weiterhin aufweist :

- einen ersten Schritt (11, 12) der Verarbeitung des digitalisierten Hologramms, und
- einen zweiten Schritt (13, 15, 16, 17, 18), wobei ausgehend von dem in dem ersten Schritt verarbeiteten digitalisierten Hologramm ein rekonstruiertes holographisches Bild (14) erhalten wird durch eine diskrete Fresnel-Transformation, die angewendet wird auf ein Feld mit $V_e$-Werten, wobei $V_e$ größer ist als zur Rekonstruktion in einer Beobachtungsebene,

wobei **das Verfahren dadurch gekennzeichnet ist, dass** das Feld, das eine Anzahl von $V_e$-Werten (50, 51) hat, das Feld von $V_r$-Werten enthält und eine ganzzahlige Anzahl $p=V_e\text{-}V_r>0$ von konstanten Werten (50), wobei die Anzahl $V_e$ von Werten ist:

$$V_e = \frac{\lambda^2 d^2}{(\Delta x \Delta y)(\Delta\xi\Delta\eta)}$$

d.h. invers proportional zu dem Produkt des Bereichs des elementaren Pixels und dem gewünschten Bereich $\Delta\xi\Delta\eta$ in der Beobachtungsebene entsprechend dem Produkt der räumlichen Auflösungsintervalle $\Delta\xi = (\lambda d/N_e\Delta x)$ und $\Delta\eta = (\lambda d/M_e\Delta y)$, die dem rekonstruierten holographischen Bild (14) zugeordnet sind, wobei $\lambda$ die Wellenlänge des Wellenstrahls ist, der das Objekt trifft, von dem das Hologramm aufgenommen wird, und $d$ der Abstand zwischen dem Erfassungsgerät und dem Objekt ist, von dem das Hologramm erfasst wird.

2. Verfahren gemäß Anspruch 1, **dadurch gekennzeichnet, dass** die $p$-Konstantwerte (50) Nullwerte sind.

3. Verfahren gemäß Anspruch 1 oder 2, **dadurch gekennzeichnet, dass** die $p$-Werte (50) extern zu dem Feld von $V_r$-Werten (51) angeordnet werden.

4. Verfahren gemäß Anspruch 3, **dadurch gekennzeichnet, dass** die $p$-Werte (50) in einer symmetrischen Weise angeordnet werden.

5. Verfahren gemäß Anspruch 3, **dadurch gekennzeichnet, dass** die $p$-Werte (50) in einer nicht-symmetrischen Weise angeordnet werden.

6. Verfahren gemäß einem der vorangehenden Ansprüche, **dadurch gekennzeichnet, dass** das digitalisierte Hologramm ein rechteckiges Feld von $Vr=N_r M_r$-Werten (51) ist, wobei jeder Wert einem Pixel mit Dimensionen $\Delta x$, $\Delta y$ entspricht.

7. Verfahren gemäß einem der Ansprüche 1 bis 6, **dadurch gekennzeichnet, dass** $N_e= (\lambda d/\Delta x^2)$, $M_e= (\lambda d/\Delta y^2)$, $\Delta\xi=\Delta x$, $\Delta\eta =\Delta y$ ist.

8. Computerprogramm, **dadurch gekennzeichnet, dass** es Code-Mittel aufweist, die geeignet sind, um bei einem Ablauf auf einem Computer den ersten und zweiten Verfahrensschritt gemäß einem der Ansprüche 1 bis 7 auszuführen.

9. Speichermedium, das von einem Computer lesbar ist, auf dem ein Programm gespeichert ist, **dadurch gekennzeichnet, dass** das Programm das Computerprogramm gemäß Anspruch 8 ist.

10. Vorrichtung zum Akquirieren und Rekonstruieren holographischer Bilder, aufweisend ein Bilderfassungsgerät (9), das angeordnet ist, um ein digitalisiertes Hologramm aufzunehmen, und eine Verarbeitungseinheit für ein digitalisiertes Hologramm, **dadurch gekennzeichnet, dass** die Verarbeitungseinheit das digitalisierte Hologramm verarbeitet durch Verwendung des Verfahrens gemäß einem der Ansprüche 1 bis 7.

**Revendications**

1. Procédé de reconstruction d'images holographiques dans l'holographie numérique, comprenant une étape préliminaire dans laquelle une image holographique est détectée et transformée en un hologramme numérisé (10) par un dispositif de détection d'image (9) placé dans un plan de dispositif de détection et ayant des intervalles d'échantillonnage $\Delta x$, $\Delta y$, l'hologramme numérisé (10) étant un groupement comportant un nombre $V_r$ de pixels élémentaires numériques correspondant chacun à une valeur d'intensité de signal (51) détectée au niveau de pixels élémentaires du dispositif de détection d'image, de telle sorte que la résolution spatiale associée à l'hologramme numérisé soit donnée par les tailles $\Delta x$, $\Delta y$ des pixels correspondant auxdits intervalles d'échantillonnage du dispositif de détection d'image, le procédé comprenant de plus :

   - une première étape (11, 12) de traitement de l'hologramme numérisé, et
   - une deuxième étape (13, 15, 16, 17, 18), dans laquelle, à partir de l'hologramme numérisé traité dans la première étape, une image holographique reconstruite (14) est obtenue par une transformée de Fresnel discrète appliquée sur un groupement ayant $V_e$ valeurs, $V_e$ étant supérieur à $V_r$, pour la reconstruction dans un plan d'observation,

   le procédé étant **caractérisé en ce que** ledit groupement qui a un nombre de $V_e$ valeurs (50, 51) comprend ledit groupement de $V_r$ valeurs et un nombre entier $p = V_e - V_r > 0$ de valeurs constantes (50), ledit nombre $V_e$ de valeurs étant de :

   $$V_e = \frac{\lambda^2 d^2}{(\Delta x \Delta y)(\Delta \xi \Delta \eta)}$$

   ou, autrement dit, étant inversement proportionnel au produit de la surface dudit pixel élémentaire et de la surface désirée $\Delta \xi \Delta \eta$ dans le plan d'observation correspondant au produit des intervalles de résolution spatiaux $\Delta \xi = (\lambda d/N_e \Delta x)$ et $\Delta \eta - (\lambda d/M_e \Delta y)$ associés à l'image holographique reconstruite (14), $\lambda$ étant la longueur d'onde du faisceau d'ondes frappant l'objet dont l'hologramme est enregistré, et d étant la distance entre le dispositif de détection et l'objet dont l'hologramme est détecté.

2. Procédé selon la revendication 1, **caractérisé en ce que** lesdites p valeurs constantes (50) sont des valeurs nulles.

3. Procédé selon la revendication 1 ou 2, **caractérisé en ce que** lesdites p valeurs (50) sont disposées extérieurement par rapport audit groupement de $V_r$ valeurs (51).

4. Procédé selon la revendication 3, **caractérisé en ce que** lesdites p valeurs (50) sont disposées d'une façon symétrique.

5. Procédé selon la revendication 3, **caractérisé en ce que** lesdites p valeurs (50) sont disposées d'une façon non symétrique.

6. Procédé selon l'une quelconque des revendications précédentes, **caractérisé en ce que** l'hologramme numérisé est un groupement rectangulaire de $V_r = N_r \cdot M_r$ valeurs (51), chaque valeur correspondant à un pixel de dimensions $\Delta x$, $\Delta y$.

7. Procédé selon l'une quelconque des revendications 1 à 6, **caractérisé en ce que** Ne = $(\lambda d/\Delta x^2)$, $M_e = (\lambda d/\Delta y^2)$, $\Delta \xi = \Delta x$, $\Delta \eta = \Delta y$.

8. Programme informatique, **caractérisé en ce qu'**il comprend des moyens formant code aptes à exécuter, lorsqu'ils sont exécutés sur un ordinateur, les première et deuxième étapes de procédé selon l'une quelconque des revendications 1 à 7.

9. Support de mémoire, lisible par un ordinateur, mémorisant un programme, **caractérisé en ce que** le programme est le programme informatique selon la revendication 8.

10. Appareil pour acquérir et reconstruire des images holographiques, comprenant un dispositif de détection d'image (9) configuré de façon à acquérir un hologramme numérisé, et une unité de traitement d'hologramme numérisé, **caractérisé en ce que** l'unité de traitement traite ledit hologramme numérisé à l'aide du procédé selon l'une quelconque des revendications 1 à 7.

**Fig. 1**

**Fig. 2**

(a)

(b)

**Fig. 3**

(a)

(b)

**Fig. 4**

**Fig. 5**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 6262818 B, Cuche

- US 6246495 B, Yamaguchi

### Non-patent literature cited in the description

- **M.K. KIM.** Wavelenght-scanning digital interference holography for optical section imaging. *Optics Letters,* 1999, vol. 24 (23), 1693
- **FERRARO et al.** *Optics Letters,* 2003, vol. 28 (14), 1257-1259
- **I.YAMAGUCHI.** Phaseshifting color digital holography. *Optics Letters,* July 2002, vol. 27 (13), 1108
- **J.KATO et al.** Multicolor digital holography with an achromatic phase shifter. *Optics Letters,* 2002, vol. 27 (16), 1403

- Coding and binarisation in digital Fresnel holography. **M. BERNHARDT et al.** Optics Communications. North-Holland Publishing Co. Amsterdam, 01 June 1990, vol. 77, 4-8
- **T. M. KREIS et al.** Methods of Digital Holography: a comparison. *Proceedings of the SPIE,* 1997, vol. 3098, ISSN 0277-786X, 224-233
- **INDEBETOUW et al.** *Appl. Phys. Lett.,* 1999, vol. 75, 2017-2019
- **GOODMAN.** Introduction to Fourier Optics. Mac-Graw-Hill Companies Inc, 1996